# EUROPEAN PATENT APPLICATION

(11) **EP 1 499 102 A2**
(43) Date of publication of application: **19.01.2005**
(21) Application number: 04253303.4
(22) Date of filing: 03.06.2004
(51) Int. Cl.: H04N 1/00, H04N 1/32

(54) **Counterfeiting instrument tracking in high speed color printing apparatus**

(30) Priority: 18.07.2003 JP 2003199094
(71) Applicant: Ricoh Company, Tokyo 143-8555 (JP)
(72) Inventor: Ohmori, Masatake, Zama-shi Kanagawa-ken (JP)
(74) Representative: Leeming, John Gerard

(57) **Abstract**

The present invention attempts to provide a color printing apparatus capable of superposing a counterfeiting instrument identifying pattern only on an image while suppressing decrease in printing speed as little as possible. The color printing apparatus includes an image memory device that stores input image data, an image region extracting device that extracts an image region in the image memory device, an image superposing device that superimpose specified pattern data on the image data stored in the image memory device in accordance with a result of extraction performed by the image region extracting device, a data reordering device that reorders the image data in accordance with a printing manner, and a data transmitting device that transmits image and pattern data to an image formation system.

## Description

The present invention relates generally to a color printing apparatus, such as an ink jet printing apparatus, a color copier, etc., and in particular to a color printing apparatus capable of superimposing specific image data capable of identifying a counterfeiting instrument only on image data in a memory.

Due to recent advances in image resolution, image processing, and printing, high precision color image printing is possible at relatively low cost. For example, a color printing apparatus employing an ink jet process can be used in a printing process capable of outputting a high precision and gradation color image at low cost. As a result, paper money and valuable securities and so on are unfortunately counterfeited by employing such high precision output instruments.

In order to prevent such counterfeiting, a function of detecting specific information relating to paper money and either sounding an alarm or disabling an operation is generally included in scanning and printing instruments. Besides stopping the above-mentioned operation, the ability to identify an instrument, which has generated an output, is important in combatting crime. Thus, information identifying the outputting instrument is sometimes written on printing material in some manner. For example, a fine pattern not perceptible to humans is embedded in an image as discussed in Japanese Patent Application Laid Open No. 2000-313156. Further, as discussed in Japanese Patent Application Laid Open No. 2002-240387, information can be written with colorless special ink which generates light radiation with ultraviolet light, or information is embedded in the image and detected by being mapped in a frequency domain.

The simplest method among those, is using information hardly perceptible to humans embedded in image data. Specifically, image data is printed with pattern data capable of identifying a printing instrument superimposed on the image but without being detectable. To identify the output instrument based upon an output image, the pattern data is extracted.

When an image is formed by an ink jet process, a method most frequently used is to perform two dimensional image formation that discharges ink in accordance with input image information in synchronism with movement of a carriage in a main scanning direction while transporting recording medium in a sub-scanning direction.

With such a recording process, printing efficiency, for example a number of printing sheets per minute, can be improved by speeding up either sheet conveyance or the movement of a carriage as much as possible. For such a purpose, printing is sometimes speeded up by either moving the carriage at higher speed in a blank region than in a non-blank region or by conveying a sheet at high speed in a blank in the sub-scanning direction.

When pattern data is to be superimposed on and output with image data, it is not often possible to speed up the sheet conveyance or carriage movement. This is because the blank region entirely or almost entirely disappears if pattern data is excessively superimposed, even on the blank region

The present invention aims to solve or ameliorate these problems and attempts to provide a color printing apparatus capable of superimposing an instrument identifying pattern on an image while reducing the decrease in printing speed as little as possible.

In order to solve the above-described problems, a color printing apparatus of the present invention comprises an image memory device that stores input image data, an image region extracting device that extracts an image region in the image memory device, a pattern superimposing device that superimposes specific pattern data on image data stored in the image memory device in accordance with a result of the extraction performed by the image region extracting device, a data reordering device that reorders image data in accordance with a printing manner, and a data launching device that launches data to an image formation system. Thus, since pattern data is superimposed only on image data existing after an image region is extracted, any decrease in printing efficiency can be reduced.

Further, since only a component color is used as specified pattern data among component colors of printing use color separation plates, influence of insertion of specified pattern data to original image data can be minimized as small as possible.

Further, even if pattern data is superimposed in any manner and anywhere in a color separation plate, for example, over the entire image plane, printing efficiency is not decreased by the pattern superposition. Because, the image region extracting device extracts only an image region in the other color separation plate than that the pattern superposition is already performed. Specifically, regional extraction is executed from the other color separation plate data.

Further, a color of specified pattern data is hardly perceptible to human. For example, a color such as yellow hardly perceptible to human is used when recording medium such as a sheet is white in order to suppress influence to an original image as small as possible.

Further, since a color of specified pattern data can be selected in accordance with a recording medium color, and thus a color to write a pattern can be selected in accordance with a recording sheet color, pattern information can be written while being indistinctive but detectable in accordance with recording medium.

Further, since a color to write a pattern can be automatically selected in accordance with a sheet color by employing a color sensor that detects a sheet color and a color selecting device that automatically selects a color of specified pattern data in accordance with a printing medium color detected by the color sensor, pattern information can be more effectively written.

Further, since pattern data is superimposed on image data before the image data is reordered by arranging an image superposing device in a former step than a data reordering device, a data superposition system can be relatively simpler.

The present invention will be described below with reference to exemplary embodiments and the accompanying drawings, in which:
FIG. 1 is a block chart illustrating a schematic configuration of a color printing apparatus according to the first embodiment of the present invention;
FIG. 2 is a diagram illustrating exemplary image data output by the color printing apparatus according to the first embodiment;
FIG. 3 is a diagram illustrating another exemplary image data output by the color printing apparatus according to the first embodiment;
FIG. 4 is a diagram illustrating still another exemplary image data output by the color printing apparatus according to the first embodiment;
FIG. 5 is a chart illustrating an exemplary image formed during a stroke of a printing head having a width in a sub scanning direction;
FIG. 6 is a chart partially illustrating the image of FIG. 5;
FIG. 7 is a block chart illustrating a process starting from when image data is reordered to when it is launched to an ink jet head;
FIG. 8 is a diagram illustrating a pattern to be superimposed and output with an image;
FIG. 9 is a chart illustrating an exemplary method of repeatedly superposing the pattern of FIG. 8 on image data;
FIG. 10 is a diagram showing an exemplary image existing region surrounded by a black boarder;
FIG. 11 is a block chart illustrating a process starting from when image data is superimposed to when it is reordered and launched to an ink jet head;
FIG. 12 is a block chart illustrating a process starting from when an image is input to when it is launched to an ink jet head in a color printing apparatus according to the second embodiment of the present invention;
FIG. 13 is a flowchart illustrating an operation of a color printing apparatus according to the sixth embodiment of the present invention; and
FIG. 14 is a chart illustrating a pattern superposition range determining process performed by detecting image existing regions of the other component color planes than that a pattern is entirely written.

A color printing apparatus of the present invention includes an image memory device for storing input image data, an image region extracting device for extracting an image region in the image memory device, an image superimposing device for superimposing specific image data on the image data stored in the image memory device in accordance with a result of extraction performed by the image region extracting device, a data reordering device for reordering the image data in accordance with a printing manner, and a data launching device for launching data to be printed to an image formation system.

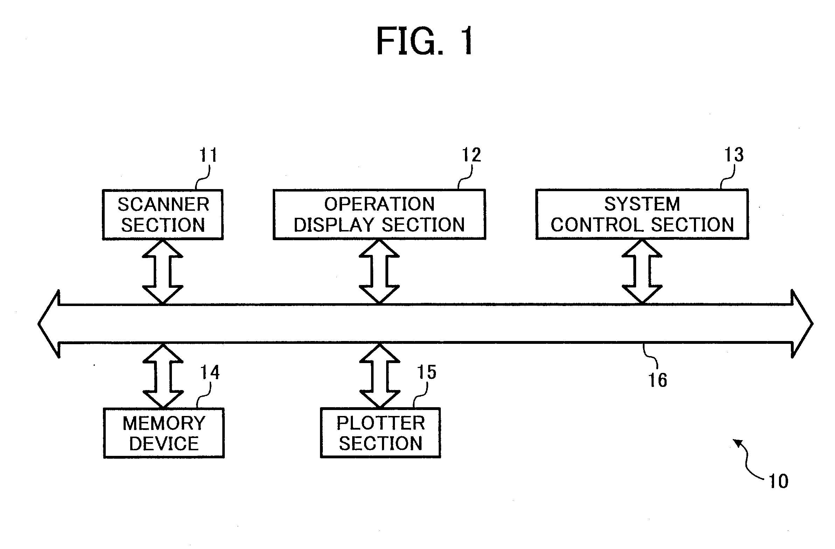

An exemplary color printing apparatus 10 according to a first embodiment of the present invention is described more in detail with reference to a block chart of FIG. 1. The term "instrument" used hereinafter includes an image inputting device. An image inputting device is not necessarily a scanner and can be a device capable of inputting image data from a host apparatus or the other types of devices. A color printing apparatus 10 includes a scanner 11, an operation display 12, a system controller 13, a memory 14, and a plotter 15. These devices are connected to each other via an internal bus 16. The scanner 11 serves as an image inputting device for reading and converting an image into digital data, and is formed from an optical mechanism such as a reduction optical system having a light source, a lens, a CCD, and A/D converter, and an image processing device or the like. Image data taken by the scanner 11 is temporary stored in the memory 14, and is transferred to the plotter 15 at a requisite speed. The image data is then printed out as a color image. The operation display 12 serves as a man-machine interface and allows an operator to input various commands and display various messages to the operator. The system controller 13 generally controls the entire instrument and includes a CPU, a ROM, a RAM, a DMAC, and similar devices.

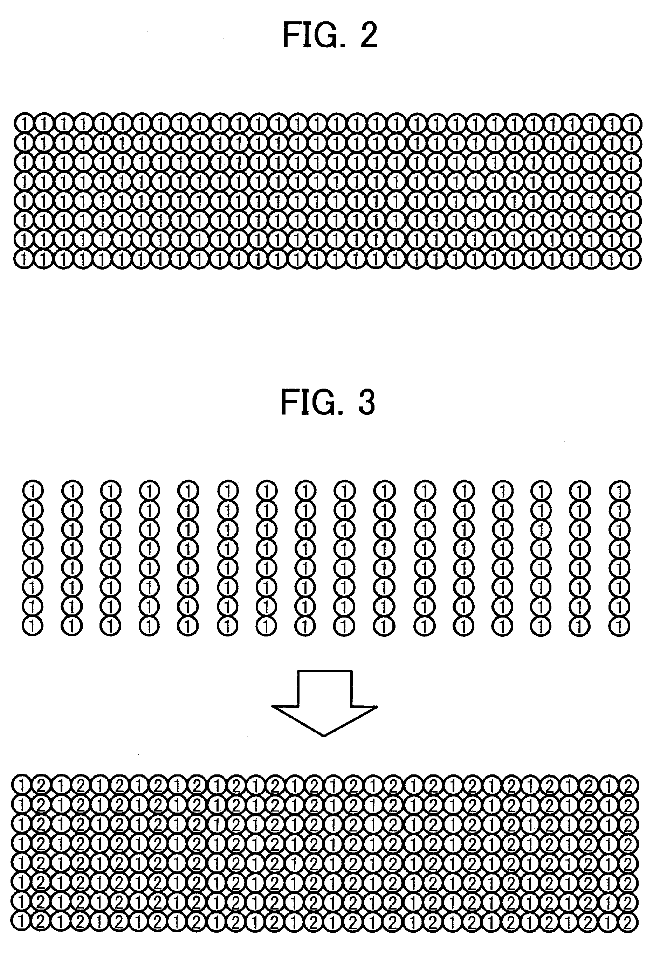

Now, various examples of image data output by the color printing apparatus 10 are described with reference to FIGS. 2 to 4, wherein an ink jet recording apparatus is typically described as the color printing apparatus 10.

An image obtained by one stroke of an ink jet head is shown in FIG. 2, in which a circle corresponds to a pixel. Specifically, an output of an image is shown there when the inkjet head moves from left to right, for example. For the purpose of easy comprehension, description will be made using a single component color, even if a practical color ink jet process employs various component colors. Since the inkjet head has eight dots in the sub-scanning direction, and outputs those during every movement from left to right side ends, a two-dimensional image is formed. In this example, since the inkjet head is vertically arranged and conventional raster scanning is performed in an order of image data in the memory, a mechanism is generally required to vertically abstract the image data from a plurality of lines. The mechanism is realized by a later mentioned data reordering device. However, since the next dot is shot before an adjacent dot has not yet dried, phenomenon such as blur generally takes place, and thereby a quality of an output image deteriorates.

In order to suppress such phenomenon, ink is output every other dot in a main scanning direction during the first stroke as shown in the upper section of FIG. 3. Then, the second stroke fills in so as to complete a dot image as shown in the lower section thereof.

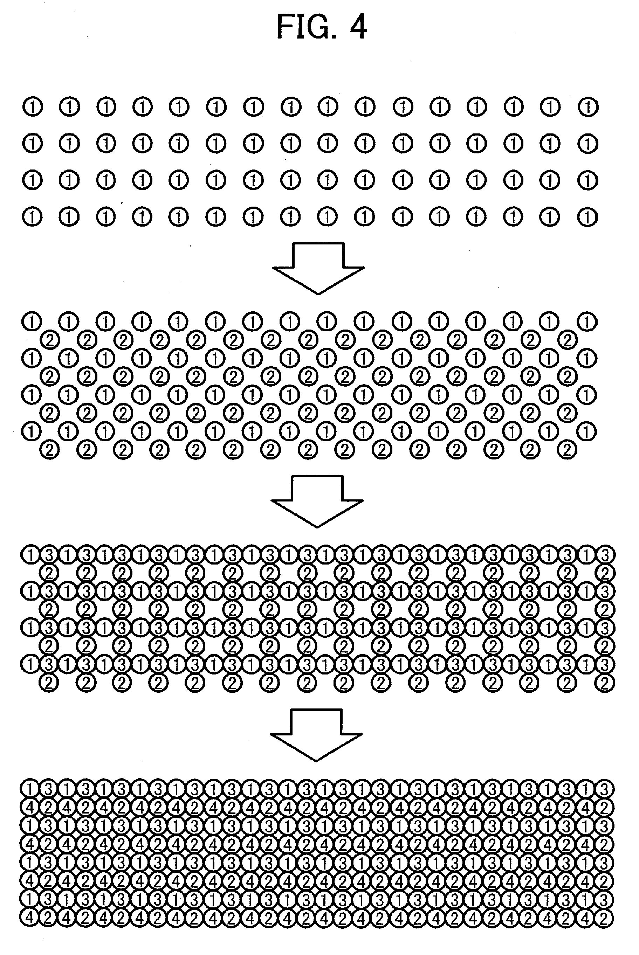

Further, as shown in FIG. 4, if a dot image is completed by four strokes, a quality of the dot image is more improved. As for movement of the inkjet head, since a mechanical positional precision is mostly improved and an output image can be more high quality, the inkj et head is always moved and writes in one direction, for example, from the left. If reciprocally writing, the image quality slightly deteriorates due to decrease in the positional precision.

When attempting to improve a quality of an image in this manner, the number of strokes increases and printing takes longer, because a moving distance of the carriage is extended by returning to a home position serving as a default start position for the carriage and the like.

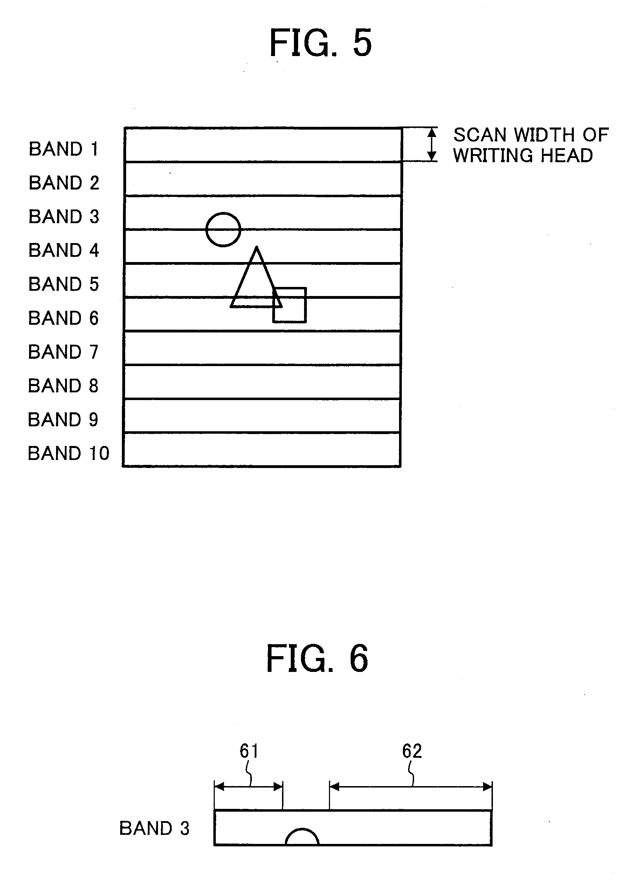

As shown in FIG. 5, if an image having ten times of the width of the inkjet head in the sub scanning direction (hereinafter referred to as a scan width) to be formed at least by ten strokes exists, for example, since only a blank exists on bands 1, 2, and 7 to 10 as shown in the drawing, it is needless to move and write with the inkjet head while consuming a time. In such a situation, an output time per a recording medium such as a sheet is controlled and shortened by feeding it faster than usual or omitting writing itself.

The example shown in FIG. 5 illustrates a case of the sub-scanning direction. However, a similar operation is performed to reduce time in accordance with an image data existence condition in the main scanning direction by speeding up the movement of the carriage in an image data blank region, or returning the carriage to the home position immediately after an image data region has been passed and only a blank remains in the right side, and so on.

For example, when referring to the band three in FIG. 6 partially expanding FIG. 5, since there exists a blank in an area 61, the carriage is moved at high speed thereto, and an image is output only corresponding to an image existing region. Since a blank exists in an area 62, the carriage is returned at high speed, or is conveyed to the right side end. In this way, various methods can be adopted.

Specifically, a manner of moving the carriage is determined in accordance with an image data existence condition in area bands written by one stroke. Thus, blank regions are previously detected using hardware during data transfer between memories. For example, a detecting circuit is formed from a counter capable of stopping when there is data at the left side end, for example. A continuous blank region can be detected by software. Of course, such an operation can be performed by reading a memory with a sufficiently fast calculating device. Further, the hardware detecting device is employed in order to simply speed up processing.

Further, since an order of sending image data to the ink jet head varies in accordance with a number of strokes required to write an image and a writing start origin and so on as mentioned above, reordering of image data is required in the ink jet process upon need.

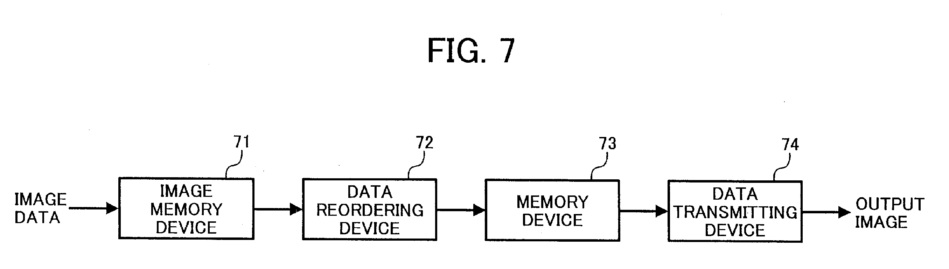

A process staring from reordering to transmitting image data to the ink jet head is shown in FIG. 7. As shown, input image data is temporary stored in the image memory 71. The data reordering device 72 then reads the image data in a prescribed order from the image memory 71, and reorders the image data. The data reordering device 72 then writes now reordered image data in the image memory 73. In this regard, it is expedient that image data written in the memory 73 has a length of one stroke. At this moment, an image data region or an image data blank region is determined, and the data launching device 74 reads image data of an image existing range from the memory 73 in turn, and launches them to the ink jet head as an output image. At that time, a high-speed printing is achieved by moving the inkjet head at high speed or similar manners.

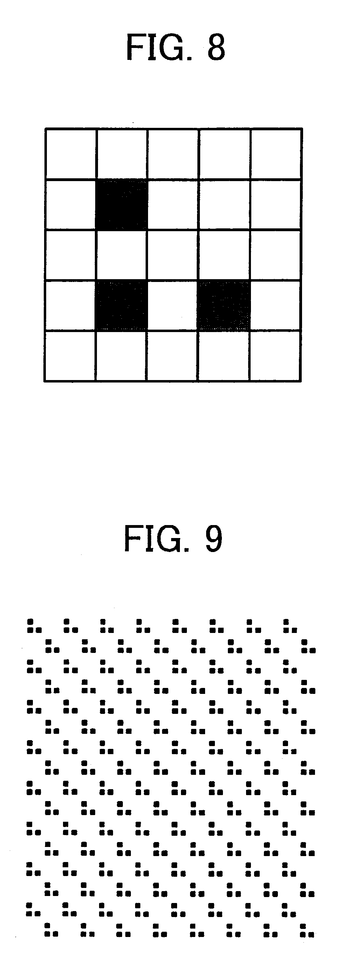

Thus, the method represents that output efficiency does not decrease even when a specified pattern is superimposed on image data and is output in the color printing apparatus employing the ink jet process according to the first embodiment. The pattern to be superimposed on the image and be output is exemplified in FIG. 8. As shown, a pattern identifying an instrument is formed by filling in a unit of five times five pixels with one or more specified bits. Specifically, an example of repeatedly superposing this data on image data is illustrated in FIG. 9, and as shown, the pattern of FIG. 8 is repeated. With such a pattern being written within an image area, an output instrument can be identified when the pattern is detected from the output image.

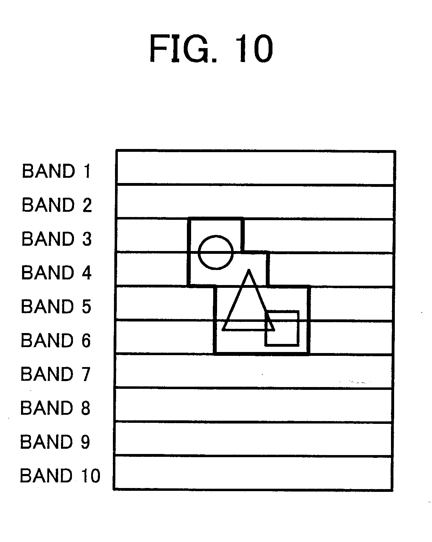

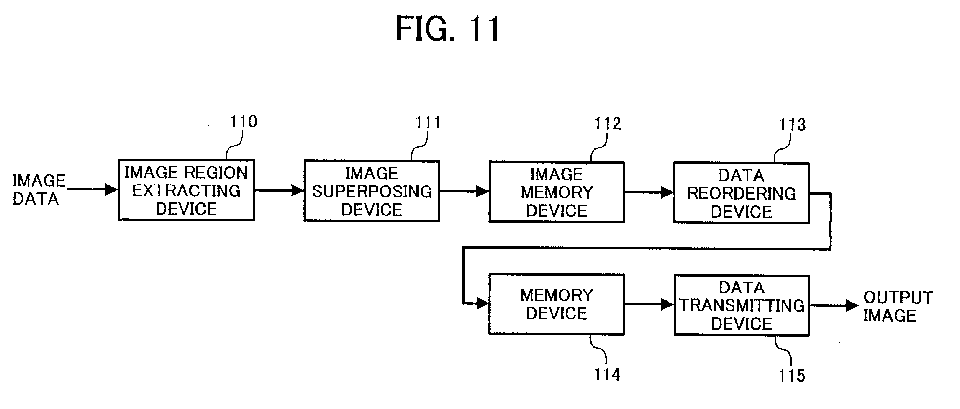

When writing such a pattern, it is most efficient to repeatedly fill in the entire image with the same patterns from a hardware point of view. However, the inkjet process decreases an output speed as a result. That is, the pattern data is superimposed on an image data blank region, and thus, the region should be written without skipping. Thus, it is most efficient to detect an image data blank region before the above-mentioned pattern data is superimposed on image data, and superimpose the pattern data only on an image existing region. Thus, as shown in FIG. 10, the pattern data is controlled to be superimposed only on a region including image data surrounded by a black border. By superposing the pattern in such a manner, a necessary pattern can be output without reducing depiction efficiency required for a high speed ink jet process. Such pattern superposition can be performed in any steps of a data flow. However, in order for necessary data pattern to be finally output after reordering, superposition should be performed in accordance with the reordering. In contrast, superposition on ordinary order data, i.e., raster scan data, can be executed before the reordering. An exemplary configuration of the latter system is shown in FIG. 11. Specifically, an image superimposing device 111 superimposes pattern data on input image data during their transfer between memories, and data already receiving the superimposition of the pattern data is temporary stored in an image memory 112. An explanation of the subsequent processes is omitted because they are identical with the processes described with reference to FIG. 7.

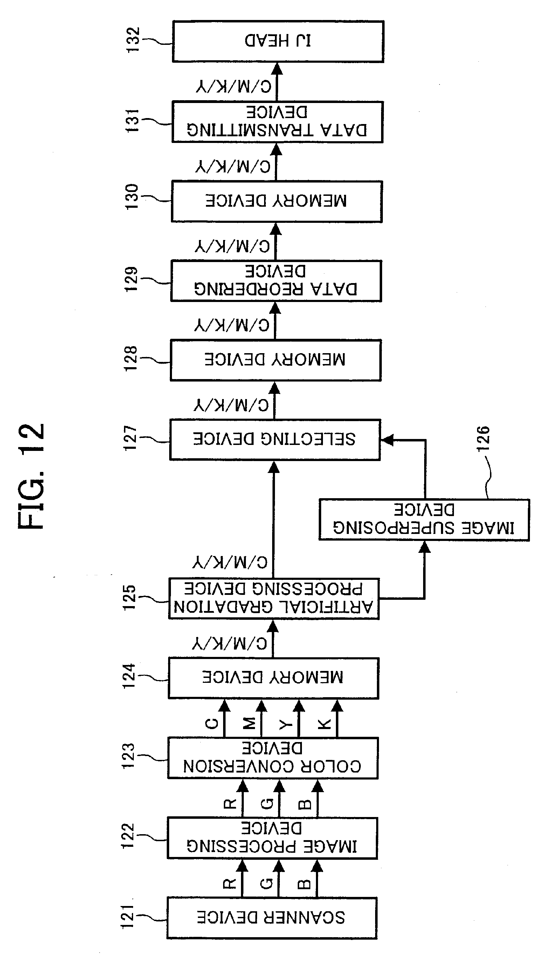

A color printing apparatus according to the second embodiment is now described with reference to FIG. 12. In the color printing apparatus, pattern data having a prescribed component color selected among various component colors is utilized. A data flow starting from image input to the color printing apparatus according to the second embodiment is shown in FIG. 12. As shown, image data read by a scanner device 121 is a signal of an RGB color space, and undergoes a process such as Y adjustment, MTF correction, etc, in an image processing device 122. The image data is then input to a color conversion device 123. At this moment, the image data should be finally converted into a color space of ink. Conversion into four colors CMYK is exemplified in this example. However, the conversion is not limited to the above four color ink depending upon an instrument type. For example, in order to smoothly reproduce a halftone color, i.e., reduce image granulation, more ink colors are utilized. Of course, the conversion method is not unique and varies depending on the ink performance. However, the ink simply includes the four colors CMYK in this example. Thus converted image data is temporarily stored in the memory 124. The image data then decreases a number of gradation levels into a prescribed level, for example, binary or multi-value data, through an operation of a pseudo gradation processing device 125 so that the ink jet head can print. Such conversion is generally executed using a dither system or an error diffusion system. Subsequent processes thereafter may be performed sequentially, i.e. per color, or in parallel, i.e. simultaneously. In the latter case, a pseudo-gradation processing device should be capable of simultaneously processing the four colors. The data flow after that is similar to that described with reference to FIG. 7 or FIG. 11. Since the ink jet head 132 includes a discharge nozzle per color, image data is launched per color, and ink is discharged at a prescribed timing in accordance with the image data.

At this moment, superposition of pattern data is performed by an image superimposing device 126 in the subsequent stage of the pseudo-gradation processing device 125. In the color printing apparatus according to the second embodiment, a selection device 127 selects either image data on which the pattern data has been superimposed or image data on which it has not. At this moment, only a color is controlled to pass through the image superposition device 126.

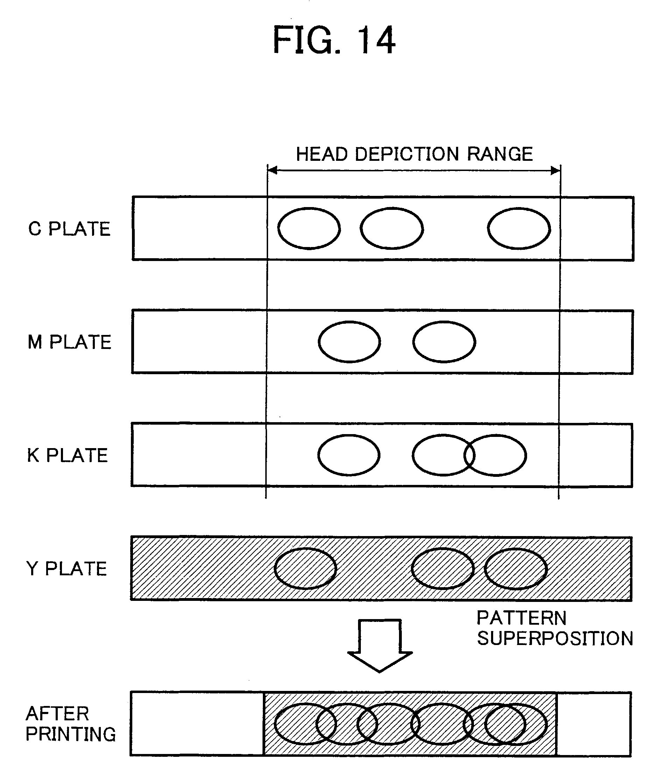

A color printing apparatus according to the third embodiment is now described with reference to FIG. 14. As shown, an area to receive superposition is determined based upon image data on component color planes C, M, and K other than the component color plane Y having entirely received pattern writing. In such a situation, the pattern is preferably written over the Y component color plane starting from its leftmost end regardless of an image data region. Thus, when the image data are output, movement of the inkjet head is controlled in accordance with the image data region in the CMK component color planes included in the memory 130, and image data on the Y component color plane corresponding to the image data of the CMK component color planes is output. By controlling in such a manner, a pattern superposing time can be simply controlled.

Further, when only Y color image data exists outside the inkjet head depiction range determined by the other component colors C, M, and K, it cannot be outputted. Thus, the color conversion device 123 always converts RGB signals into component colors CMYK and does not convert into Y component color alone.

A color printing apparatus according to the fourth embodiment is now described. In the color printing apparatus, a component color of a pattern to be superimposed employs a reduced shade color such as Yellow, for example, to be hardly perceptible to human. Of course, it is not limited to the Yellow, and superposition pattern data can be a component color other than the Yellow, when multiple inks other than four colors are utilized. Important matter is that written information does not visually disturb an original image. In addition, the smaller the dot size, the less noticeable when the pattern data is output.

A color printing apparatus according to the fifth embodiment is now described. The fifth embodiment enables selection of a component color to write a pattern in accordance with a recording medium color. It is preferable that a reduced shade color such as Yellow is used when a white sheet receives pattern printing. However, it can be supposed that a written pattern itself is hardly detected when printed on a sheet of somewhat darker color such as a recycle sheet. In such a situation, a thicker color is used to print a pattern.

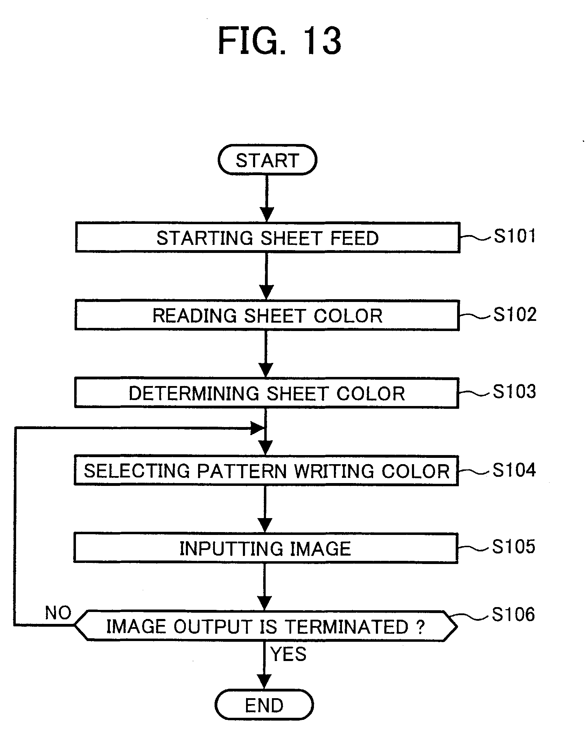

A color printing apparatus according to the sixth embodiment is now described. The sixth embodiment modifies the color printing apparatus of the fifth embodiment by enabling automatic selection of a component color to superimpose pattern data based upon a color detected by a sheet color sensor. An operational flow of the color printing apparatus is now described with reference to a flowchart of FIG. 13. As shown, when a sheet feeding is started (Yes, in step S101), a sheet color is read (in step S102) by the sheet color sensor (not shown) disposed on a sheet conveyance path. A component color to write pattern is then selected in accordance with the information (in steps S103 and S104). Remaining operations are substantially the same as above.

A color printing apparatus according to the seventh embodiment is now described. In the color printing apparatus, if an image superposing device is positioned at a subsequent stage of a data reordering device, image data should be reordered in accordance with an order of reordered image data and pattern data is then superimposed thereon to be properly displayed when printed. Obviously, since a condition such as a number of strokes required for completing a dot image, a scanning start origin, etc., needs be frequently changed, a circuit becomes complex. Thus, the circuit superposing pattern data on image data can be simpler if appropriately disposed before the image data is reordered.

The present invention is not limited to the above-mentioned several embodiments. It is needless to say that various modifications and alternatives are possible as far as they fall within the scope of the below listed claims.

This application claims priority under to Japanese Patent Application No. 2003-199094 filed on July 18, 2003, the entire contents of which are herein incorporated by reference.

### ADVANTAGES OF THE INVENTION

As mentioned above, a color printing apparatus according to the present invention features an image memory device that stores input image data, an image region extracting device that extracts an image region in the image memory device, a pattern superposing device that superimposes specified pattern data only on the image data stored in the image memory device in accordance with a result of extraction performed by the image region extracting device, a data reordering device that reorders the image data in accordance with a printing manner, and a data launching device that launches image and pattern data to an image formation system. Thus, since a necessary pattern is only superimposed on a region having an image after the image region is extracted, any reduction of printing efficiency can be minimized.

Further, by using only a color for specified pattern data among colors of printing use color separation plates, influence of superposition of the specified pattern data to an original image can be reduced as far as possible.

Further, since region extraction is executed using the image region extracting device on the basis of a color separation other than the color separation on which the specified pattern data is already superimposed, printing efficiency is not reduced by the pattern superposition, even if pattern data is superimposed on image data in any manners and anywhere in the color separation, for example, over the entire image plane.

Further, specified superimposition pattern data has a color hardly perceptible to human. For example, by writing with a color such as yellow hardly perceptible to human in a white colored recording medium such as a sheet, pattern information can be writable with it being hardly perceptible to human. Specifically, influence on an original image is reduced as far as possible.

Further, by allowing a color of specified image data to be selected in accordance with a recording medium such as a sheet, information can be written to be indistinctive but detectable in accordance with the recording medium.

Further, since a color to write pattern information can be automatically selected in accordance with a sheet color by employing a color sensor to detect the sheet color and a color selecting device to automatically select a color of specified pattern data in accordance with the sheet color detected by the color sensor, information can be more efficiently written.

Further, since pattern data is superimposed on image data before the image data are reordered by arranging an image superposing device in a former step than a data reordering device, data superposition can be relatively simpler.

### DESCRIPTION OF REFERENCE NUMBERS

10: Color Printing Apparatus 11: Scanner 12: Operation Display Section 13: System Control Section 14: Memory Device 15: Plotter Section 16: Internal Bus 71, 112: Image Memory Device 72, 113: Data Reordering Device 73, 114: Memory Device 74, 115: Data Launching Device 111: Image Superposing Device

## Claims

1. A color printing apparatus (10) for outputting color image data, comprising:
an image memory device (14, 71, 112, 124) configured to store input image data;
an image region extracting device configured to extract an image region in the image memory device (14, 71, 112, 124);
an image superimposing device (126) configured to superimpose specified image data on the image data stored in the image memory device (14, 71, 112, 124) in accordance with a result of extraction performed by the image region extracting device;
a data reordering device (72, 113, 129) configured to reorder the image data in accordance with a printing method; and
a data transmitting device (74, 115, 131) configured to transmit image and pattern data to an image formation system.

2. A color printing apparatus (10) according to claim 1, wherein said specified image data includes only a single component color selected among component colors of printing use color separation plates.

3. A color printing apparatus (10) according to any one of claims 1 and 2, wherein said image region extracting device extracts an image data region of one or more color separation plates other than the color separation plate or plates on which the specified pattern data is superimposed.

4. A color printing apparatus (10) according to claim 1, 2 or 3, wherein a component color of the specified image data (FIGS. 8 and 9) is hardly perceptible to human.

5. A color printing apparatus (10) according to claim 1, 2, 3 or 4, wherein said component color is selectable in accordance with a printing medium color (S103).

6. A color printing apparatus (10) according to claim 5, further comprising:
a color sensor (S102) configured to detect a color of printing medium; and
a color selecting device (S104) configured to automatically select a color of the specified pattern data (FIGS. 8 and 9) in accordance with a printing medium color detected by the color sensor (S103).

7. A color printing apparatus (10) according to any one of claims 1 to 6, wherein said image superimposing device (126) is arranged in the preliminary step of the data reordering device (126, 129).

8. A color printing apparatus according to any of the preceding claims wherein said image region excludes areas that are blank in at least one color.

9. A computer program for superimposing specified image data on a color image, the program comprising code means that, when executed on an image processing apparatus instructs the image processing apparatus to perform the steps of:
extracting an image region of said color image;
superimposing said specified image data on said image region; and
reordering the data of said color image in accordance with a printing method.
